# EUROPÄISCHE PATENTSCHRIFT

(11) **EP 4 646 919 B1**
(45) Veröffentlichungstag und Bekanntmachung des Hinweises auf die Patenterteilung: **21.10.2026**
(21) Anmeldenummer: 24174754.2
(22) Anmeldetag: 08.05.2024
(51) Int. Cl.: A01F 15/08

(54) **KUPPLUNGSANORDNUNG**
COUPLING ASSEMBLY
ENSEMBLE EMBRAYAGE

(43) Veröffentlichungstag der Anmeldung: 12.11.2025
(73) Patentinhaber: Ortlinghaus-Werke GmbH, 42929 Wermelskirchen (DE)
(72) Erfinder: SORHAGE, Jörg, 32547 Bad Oeynhausen (DE)
(74) Vertreter: Brinkmann & Partner

(56) Entgegenhaltungen:
- EP-A2- 3 977 843
- EP-B1- 3 527 064
- DE-A1- 102005 029 405
- US-A1- 2016 081 258
- US-A1- 2021 251 147
- US-A1- 2023 077 734
- US-B2- 10 178 833
- US-B2- 11 871 701

## Beschreibung

Die Erfindung betrifft eine Kupplungsanordnung für einen mit einem Schwungrad ausgerüsteten Antriebsstrang einer Ballenpresse, mit einer dem Schwungrad antriebsseitig vorgeschalteten Rutschkupplung. Ferner betrifft die Erfindung eine Ballenpresse, vorzugsweise eine Quaderballenpresse, mit einem Arbeitsaggregat zur Verarbeitung von Erntegut zu Ballen und einem Antriebsstrang für einen Antrieb des Arbeitsaggregats.

Ballenpressen im Allgemeinen sowie Kupplungsanordnungen für Ballenpressen im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die EP 3 400 786 B2 verwiesen, die eine gattungsgemäße Ballenpresse betrifft.

Eine gattungsgemäße Ballenpresse dient dazu, beispielsweise im Schwad abgelegtes halmartiges Erntegut wie Stroh, Heu, Gras und/oder dgl. aufzunehmen und zu Ballen, insbesondere zu Quaderballen zu pressen. Zu diesem Zweck verfügt eine gattungsgemäße Ballenpresse über ein Arbeitsaggregat zur Verarbeitung von Erntegut zu Ballen sowie über einen Antriebsstrang, der im bestimmungsgemäßen Verwendungsfall einem Antrieb des Arbeitsaggregats dient. Dabei kann das Arbeitsaggregat eine Mehrzahl von einzelnen Arbeitseinrichtungen bereitstellen, insbesondere einen in einer Presskammer translatorisch beweglich gelagerten Presskolben. Dieser dient im bestimmungsgemäßen Verwendungsfall dazu, aufgesammeltes Erntegut in Ballen gewünschter Größe und Dichte zu pressen.

Zur Kraftbeaufschlagung des Antriebsstrangs dient in der Regel ein Traktor bzw. ein vom Traktor bereitgestellter Zapfwellenabtrieb, an den der Antriebsstrang der Ballenpresse im bestimmungsgemäßen Verwendungsfall angeschlossen ist. Im bestimmungsgemäßen Verwendungsfall besteht mithin eine Antriebsverbindung zwischen der traktorseitigen Zapfwelle einerseits und dem ballenpressenseitigen Antriebsstrang andererseits.

Der Antriebsstrang dient in an sich bekannter Weise einem Antrieb des ballenpressenseitigen Arbeitsaggregats. Dieses stellt in schon vorbeschriebener Weise unter anderem eine Presskammer bereit, in der ein Presskolben translatorisch beweglich gelagert ist. Im Pressbetrieb wird der Presskolben mittels des Antriebsstrangs in eine oszillierende Bewegung versetzt, infolge dessen in die Presskammer zuvor eingebrachtes Erntegut zu Ballen verpresst wird.

Um einerseits im Pressbetrieb eine hinreichend große Presskraft aufbringen zu können und um andererseits den Zapfwellenabtrieb des Traktors vor unerwünschten Lastspitzen schützen zu können, ist der Antriebsstrang der Ballenpresse mit einem als Energiespeicher dienenden Schwungrad ausgerüstet. Ein solches Schwungrad kann je nach Größe der Ballenpresse eine Masse von mehreren 100 kg aufweisen und verfügt deshalb über ein entsprechendes hohes Trägheitsmoment.

Ein hinsichtlich des Schwungrads hohes Trägheitsmoment bringt allerdings insbesondere bei einem Anfahren der Ballenpresse aus dem Stillstand den Nachteil mit sich, dass es zu einer Überlastung des vom Traktor bereitgestellten Antriebs kommen kann und/oder ein Anfahrvorgang verhältnismäßig lange dauert, da der ballenpressenseitige Antriebsstrang nur sehr langsam in Bewegung versetzt werden kann.

Eine erste Maßnahme zum Schutz insbesondere des traktorseitigen Antriebs stellt eine dem Schwungrad antriebsseitig vorgeschaltete Rutschkupplung dar. Diese sorgt im Überlastfall infolge eines Durchrutschens für eine Kraftentkopplung von Antriebsstrang und Zapfwellenabtrieb.

Diese vorbekannte Schutzmaßnahme ist aber allein nicht ausreichend und im Übrigen auch nicht dafür geeignet, den Vorgang eines Anfahrens der Ballenpresse zu verbessern. Dies gilt umso mehr, als dass es auch während eines bestimmungsgemäßen Betriebs der Ballenpresse immer wieder dazu kommen kann, dass ein Abbremsen und/oder eine Wiederbeschleunigung des ballenpressenseitigen Arbeitsaggregats und damit auch des mit dem Arbeitsaggregat in Antriebsverbindung stehenden Antriebsstrangs erforderlich ist.

Um diesen Problemen zu begegnen, ist mit der schon eingangs genannten EP 3 400 786 B2 ein Schwungrad vorgeschlagen worden, das positionsverlagerbare Massenelemente aufweist, die Aktor betrieben verstellbar sind, so dass eine Veränderung des Trägheitsmoments des Schwungrads gestattet ist. Das Trägheitsmoment des Schwungrads kann mithin während eines Betriebs und/oder im Stillstand der Ballenpresse variiert, d.h. verändert werden.

Diese aus der EP 3 400 786 B2 vorbekannte Lösung ist technisch sehr aufwendig, verschleißanfällig und wartungsintensiv. Es ergibt sich zudem in nachteiliger Weise ein träges Ansprechverhalten, da es zur Veränderung des Trägheitsmoments einer entsprechenden Positionsveränderung der einzelnen Massenelemente bedarf.

Gemäß einem im Unterschied zur EP 3 400 786 B2 gänzlich anderen Ansatz kommt ein zusätzlicher Motor als Hilfsantrieb für das Schwungrad zum Einsatz. Während eines Anfahrens beschleunigt dieser zusätzliche Motor das Schwungrad, bevor der traktorseitige Antrieb zugeschaltet wird. Diese Lösung ist insofern von Nachteil, als dass es einer kommunikationstechnischen Verbindung zwischen Traktor und Ballenpresse bedarf oder die Schaltung des zusätzlichen Motors hat manuell zu erfolgen, was unerwünschte Fehlbedienungen ermöglicht.

Gemäß einer anderen vorbekannten Konstruktion, wie sie auch in der US 11,871,701 B2 beschrieben ist, kommt ein Power-Shift-Getriebe zum Einsatz, das antriebsseitig dem Schwungrad vorgeschaltet ist. Das Power-Shift-Getriebe ist mithin zwischen traktorseitigem Antrieb einerseits und Schwungrad andererseits vorgesehen. Es ermöglicht eine langsame Erhöhung der Drehzahl, die auf das Schwungrad insbesondere während eines Anfahrvorgangs einwirkt. Das Power-Shift-Getriebe ermöglicht mithin, die Ausgangsdrehzahl im Vergleich zur Eingangsdrehzahl anzuheben. Diese vorbekannte Lösung ist in nachteiliger Weise technisch aufwendig und damit teuer.

Gemäß einer anderen aus dem Stand der Technik vorbekannten Konstruktion ist dem Schwungrad antriebsseitig eine Fliehkraftkupplung als weitere Kupplung vorgeschaltet. Es sind demnach in Reihe eine Rutschkupplung einerseits und eine Fliehkraftkupplung andererseits vorgesehen. Dabei stellt die Rutschkupplung in an sich bekannter Weise sicher, dass kein unzulässig hohes Drehmoment vom Traktor auf die Ballenpresse übertragen wird. Die Aufgabe der Fliehkraftkupplung ist es indes, im Betriebsfall zu schließen und das Schwungrad zu beschleunigen. Insofern übernimmt die Fliehkraftkupplung die Beschleunigungsarbeit. Auch diese Konstruktion ist vergleichsweise aufwendig, verschleißbehaftet und wartungsintensiv.

Den vorbekannten Lösungen ist mithin im Ergebnis gemein, dass eine Rutschkupplung und ein Hilfsantrieb vorgesehen sind, wobei der Hilfsantrieb ein zusätzlicher Motor, ein Power-Shift-Getriebe oder eine Fliehkraftkupplung sein kann und dazu dient, die Beschleunigung des Schwungrads zu realisieren. Dabei hat jeder der vorbekannten Hilfsantriebe seine spezifischen Nachteile. So macht ein zusätzlicher Motor eine Automatisierung aufwendig, weil es einer gesonderten kommunikationstechnischen Verbindung zwischen Traktor und Ballenpresse bedarf. Alternativ kann ein manueller Eingriff erfolgen, was aber fehlerträchtig ist und insbesondere im Überlastfall in seiner Wirksamkeit von der Reaktion der den Traktor bedienenden Person abhängt. Auch das Power-Shift-Getriebe ist aufwendig und es wird eine weitere Überlastkupplung sowie auch ein dem Schwungrad nachgeschaltetes Sicherungssystem benötigt. Eine Fliehkraftkupplung als Hilfsantrieb baut sehr groß auf, ist schwer und wartungsintensiv, so dass sie nur für sehr spezielle Aufgaben betriebswirtschaftlich eingesetzt werden kann.

Ausgehend vom Vorbeschriebenen ist es die **Aufgabe** der Erfindung, eine Kupplungsanordnung vorzuschlagen, die konstruktiv dahingehend weiterentwickelt ist, dass bei einem gleichzeitig einfachen Aufbau ein sicherer Betrieb einer Ballenpresse ermöglicht ist.

Zur **Lösung** dieser Aufgabe wird mit der Erfindung eine Kupplungsanordnung vorgeschlagen, die sich dadurch auszeichnet, dass die Rutschkupplung schaltbar ausgebildet ist und dass eine weitere Kupplung vorgesehen ist, die dem Schwungrad antriebsseitig nachgeschaltet ist, wobei die weitere Kupplung eine Überlastkupplung ist und mit einer Bremse zu einer Kupplungs-Brems-Kombination kombiniert ist.

Die erfindungsgemäße Kupplungsanordnung verfügt über zwei Kupplungen, nämlich über eine Rutschkupplung, die dem Schwungrad antriebsseitig vorgeschaltet ist, und eine weitere Kupplung, die dem Schwungrad antriebsseitig nachgeschaltet ist. Das Schwungrad ist mithin zwischen der Rutschkupplung einerseits und der weiteren Kupplung andererseits angeordnet.

Bei der Rutschkupplung handelt es sich um die nach dem Stand der Technik ohnehin schon vorgesehene Rutschkupplung, die dazu dient, im bestimmungsgemäßen Verwendungsfall sicherzustellen, dass kein unzulässig hohes Drehmoment vom Traktor an die Ballenpresse übertragen wird. Im Unterschied zum Stand der Technik ist die Rutschkupplung erfindungsgemäß aber schaltbar ausgebildet. Dies ermöglicht es, das Schwungrad bei sich schon drehendem traktorseitigen Zapfwellenabtrieb sanft zuschalten zu können. Dieses Zuschalten kann in einfacher Weise automatisiert durchgeführt werden, so dass es keines manuellen Eingriffs durch einen Bediener des Traktors bedarf.

Die als schaltbare Kupplung ausgebildete Rutschkupplung erfüllt in der erfindungsgemäßen Kupplungsanordnung mithin drei Aufgaben. Zum einen bietet sie Schutz vor einer Überlast, insbesondere vor einem unzulässig hohen Antriebsdrehmoment. Zum anderen dient sie einer Beschleunigung des Schwungrads, und zwar durch insbesondere sanftes Zuschalten im bestimmungsgemäßen Verwendungsfall. Darüber hinaus ermöglicht sie bei einer Überlastung beispielsweise im Störfall, die traktorseitige Motorleistung selbständig an der Presse abzuschalten, und dies ohne manuellen Eingriff durch einen Verwender.

Die erfindungsgemäß vorgesehene weitere Kupplung ist als Überlastkupplung ausgebildet und mit einer Bremse zu einer Kupplungs-Brems-Kombination kombiniert. Diese Kupplungs-Brems-Kombination ist dem Schwungrad nachgeschaltet und erfüllt im Wesentlichen zwei Aufgaben.

Zum einen ist der Abtrieb der Ballenpresse vor der kinetischen Energie des Schwungrades geschützt. Es kann eine Kraftentkopplung von Schwungrad und Arbeitsaggregat stattfinden, so dass beispielsweise in einem Störfall eine Überlastung einschließlich einer etwaigen Zerstörung des Arbeitsaggregats sicher ausgeschlossen ist. Zum anderen kann durch die Bremse ein gezieltes Anhalten stattfinden.

Im Überlastfall kann die als Überlastkupplung ausgebildete weitere Kupplung durchrutschen, womit die schon vorbeschriebene Schutzfunktion gegeben ist. Im Weiteren kann dann aber ferner aufgrund der erfindungsgemäßen Kombination von Kupplung und Bremse ein Öffnen der Kupplung bei einem gleichzeitigen Schließen der Bremse stattfinden. Dabei wird durch das Öffnen der Kupplung der Abtrieb in Richtung des Arbeitsaggregats lastfrei gestellt und mittels der Bremse gezielt angehalten. Dabei ist in diesem Zusammenhang von besonderem Vorteil, dass mittels einer ballenpressenseitigen Steuerung ein automatisches Schalten der Kupplungs-Brems-Kombination in einfacher Weise realisierbar ist. Dies bietet einen besseren Schutz vor einer Überlastung und es ist auch kein traktor- und/oder bedienerseitiger Eingriff erforderlich. Auch ein Ein- und Ausschalten, d.h. ein Schalten der Rutschkupplung kann mittels der pressenseitigen Steuerung erfolgen, womit ein vollautomatisierter Betrieb ermöglicht ist und es auch keiner kommunikationstechnischen Verbindung zwischen Traktor und Ballenpresse bedarf.

Gemäß einem weiteren Merkmal der Erfindung ist vorgesehen, dass die weitere Kupplung, d.h. die Kupplung der Kupplungs-Brems-Kombination eine Rutschkupplung ist. Diese kann im Überlastfall durchrutschen und so den Abtrieb der Ballenpresse vor einer schwungradinduzierten Überbelastung schützen. Die weitere Kupplung ist vorzugsweise hydraulisch bestätigt und überträgt im bestimmungsgemäßen Verwendungsfall die Leistung des Schwungrads und die Leistung des traktorseitigen Antriebs auf die Abtriebswelle der Kupplungs-Brems-Kombination, d.h. auf das Arbeitsaggregat. Dabei ergibt sich in Gänze durch die Kombination von Kupplung und Bremse eine insgesamt kompakte Bauform.

Gemäß einem weiteren Merkmal der Erfindung ist vorgesehen, dass sowohl die schaltbare Rutschkupplung als auch die Kupplungs-Brems-Kombination jeweils hydraulisch schaltbar ausgebildet sind. Dabei ist hinsichtlich der Kupplungs-Brems-Kombination vorgesehen, dass die Bremse federbetätigt und die Kupplung hydraulisch betätigt ist. Bei geöffneter Kupplung ist die Bremse geschlossen, so dass der Antriebsstrang arbeitsaggregatseitig lastfrei geschaltet und zugleich abgebremst ist.

Die hydraulisch schaltbare Rutschkupplung erbringt insbesondere den Vorteil, dass eine ballenpressenseitige Steuerung ermöglicht ist, womit weder ein manueller Eingriff noch eine traktorseitige Steuerung erforderlich sind. Ferner bedarf es keines weiteren Hilfsantriebs für das Schwungrad, weil eine Beschleunigung desselben durch Schalten der Rutschkupplung bei anliegender Traktordrehzahl am Zapfwellenabtrieb ermöglicht ist.

Gemäß einem weiteren Merkmal der Erfindung ist vorgesehen, dass der Kupplungs-Brems-Kombination antriebsseitig ein Getriebe nachgeschaltet ist. Abtriebsseitig der Kupplungs-Brems-Kombination ist mithin ein Getriebe vorgesehen, das in Antriebsverbindung mit dem eigentlichen Arbeitsaggregat steht. Im bestimmungsgemäßen Verwendungsfall erfolgt mithin eine Drehmomentenübertragung vom Schwungrad auf die Abtriebswelle, und zwar unter Zwischenschaltung der Kupplungs-Brems-Kombination. Die Abtriebswelle steht ihrerseits mit dem Getriebe in Wirkverbindung, welches seinerseits in Antriebsverbindung mit dem Arbeitsaggregat steht. Im Falle einer geöffneten Kupplung der Kupplungs-Brems-Kombination ist die Abtriebswelle lastfrei gestellt und abgebremst. Dass der Kupplungs-Brems-Kombination nachgeschaltete Getriebe einschließlich des nachgeschalteten Arbeitsaggregats sind somit vor einer Überlast geschützt.

Gemäß einem weiteren Merkmal der Erfindung ist vorgesehen, dass das Schwungrad und die Kupplungs-Brems-Kombination sowie vorzugsweise auch das Getriebe eine gemeinsame Baueinheit bilden. Es ist so eine insgesamt in vorteilhafter Weise kompakte Ausführungsform gegeben. Diese erlaubt im Bedarfsfall auch eine Nachrüstung bestehender Ballenpressen.

Gemäß einem weiteren Merkmal der Erfindung ist vorgesehen, dass der schaltbaren Rutschkupplung antriebsseitig ein Eingangsgetriebe vor- oder nachgeschaltet ist. Ein solches Eingangsgetriebe übersetzt vorzugsweise ins Schnellere, was es gestattet, das Schwungrad kleiner ausbilden zu können. Insbesondere bei einer Kombination des Schwungrads mit der Kupplungs-Brems-Kombination und dem Getriebe zu einer gemeinsamen Baueinheit ist dies von Vorteil.

Gemäß einem weiteren Merkmal der Erfindung ist vorgesehen, dass die Kupplungs-Brems-Kombination dazu eingerichtet ist, ein Drehmoment von 7000 Nm bis 8000 Nm, vorzugweise von 7500 Nm zu übertragen. Ein bestimmungsgemäßer Betrieb der Ballenpresse ist so gewährleistet, insbesondere ein wunschgemäßes Verpressen von Erntegut zu hinreichend weit verdichteten Ballen. Dabei ist eine hinreichend weit verdichtete Ausgestaltung der Ballen insbesondere aus Transportgründen bevorzugt.

Gemäß einem weiteren Merkmal der Erfindung ist vorgesehen, dass die schaltbare Rutschkupplung dazu eingerichtet ist, bei einer Überlast von 2200 Nm bis 3000 Nm, vorzugsweise von 2600 Nm durchzurutschen. Dabei ist die Rutschkupplung thermisch so ausgelegt, dass das Schwungrad im bestimmungsgemäßen Verwendungsfall, insbesondere im bestimmungsgemäßen Anfahrfall beschleunigt werden kann. Ein bestimmungsgemäßes Durchrutschen der Rutschkupplung hat indes dann stattzufinden, wenn traktorseitig ein zu hohes Drehmoment anliegt, so dass der pressenseitige Antriebsstrang vor einer Überlast zu schützen ist. Dabei sind der Antriebsstrang und dessen Komponenten so ausgelegt, dass ein Überlastfall erst bei einer traktorseitigen Drehmomentbeaufschlagung von mehr als 3000 Nm vorgesehen ist.

Mit der Erfindung wird des Weiteren vorgeschlagen eine Ballenpresse, insbesondere eine Quaderballenpresse, mit einem Arbeitsaggregat zur Verarbeitung von Erntegut zu Ballen und einem Antriebsstrang für einen Antrieb des Arbeitsaggregats, wobei die Ballenpresse dadurch gekennzeichnet ist, dass der Antriebsstrang eine Kupplungsanordnung der vorbeschriebenen, d.h. der erfindungsgemäßen Art aufweist. Eine solch ausgerüstete Ballenpresse verfügt über die schon vorbeschriebenen Vorteile.

Das Arbeitsaggregat kann eine Vielzahl unterschiedlicher Arbeitseinrichtungen bereitstellen, beispielsweise einen Aufsammler, einen Schneidrotor, einen Raffer und/oder eine Knoteneinrichtung. In jedem Fall aber stellt das Arbeitsaggregat erfindungsgemäß einen in einer Presskammer translatorisch beweglich gelagerten Presskolben bereit. Dieser dient der eigentlichen Verpressung von Erntegut. Im bestimmungsgemäßen Verwendungsfall erfolgt über den Antriebsstrang unter Zwischenordnung der erfindungsgemäßen Kupplungsanordnung ein Antrieb des Presskolbens. Dabei ist aufgrund der erfindungsgemäßen Ausgestaltung eine Übertragung von Überlastspitzen in den traktorseitigen Antrieb ebenso sicher unterbunden wie ein Überlastbetrieb des Presskolbens insbesondere aufgrund der vom Schwungrad freigesetzten kinetischen Energie.

Weitere Merkmale und Vorteile der Erfindung ergeben sich aus der nachfolgenden Beschreibung anhand der Figuren. Dabei zeigen
- Fig. 1: in rein schematischer Darstellung die erfindungsgemäße Kupplungsanordnung;
- Fig. 2: in einer weiteren rein schematischen Darstellung die erfindungsgemäße Kupplungsanordnung;
- Fig. 3: in teilgeschnittener Detailansicht eine Kupplungs-Brems-Kombination der erfindungsgemäßen Kupplungsanordnung sowie
- Fig. 4: in schematischer Perspektivansicht die Kupplungs-Brems-Kombination nach Fig. 3.

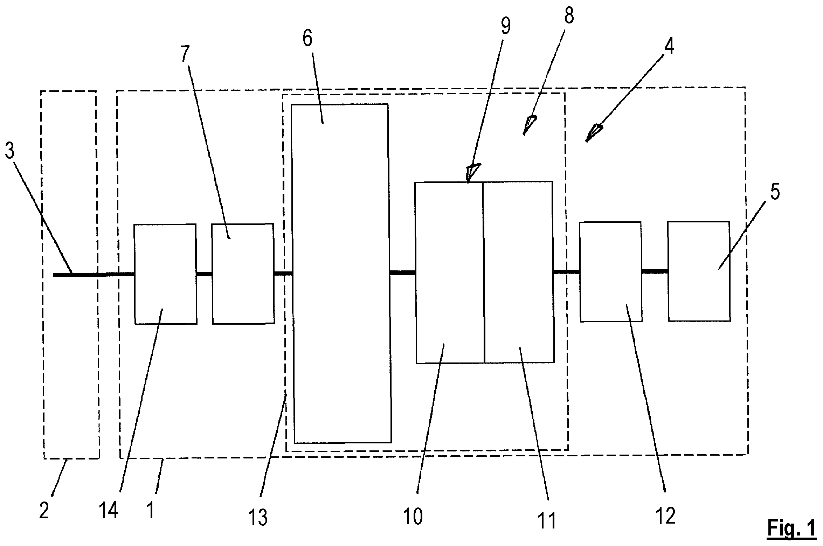

Fig. 1 lässt in rein schematischer Darstellung eine erfindungsgemäße Kupplungsanordnung 8 erkennen. Diese verfügt - wie dies im Weiteren noch näher erläutert werden wird - über eine schaltbare Rutschkupplung 7 einerseits und eine Kupplungs-Brems-Kombination 9 andererseits.

Die erfindungsgemäße Kupplungsanordnung 8 ist Teil einer Ballenpresse 1. Dabei dient die Ballenpresse 1 in an sich bekannter Weise dazu, insbesondere halmartiges Erntegut wie z.B. Stroh, Heu und/oder Gras zu Ballen zu verpressen. Im bestimmungsgemäßen Verwendungsfall wird die Ballenpresse 1 von einem Traktor 2 gezogen und ist mit diesem zum Betrieb eines von der Ballenpresse 1 bereitgestellten Arbeitsaggregats 5 antriebsverbunden. Die Ballenpresse 1 verfügt zu diesem Zweck über einen Antriebsstrang 4, der im bestimmungsgemäßen Verwendungsfall das Arbeitsaggregat 5 mit einem traktorseitigen Zapfwellenabtrieb 3 verbindet.

Das Arbeitsaggregat 5 stellt einen in einer Presskammer translatorisch beweglich gelagerten Presskolben bereit. Der Presskammer aufgegebenes Erntegut kann so zu Ballen wunschgemäß verpresst werden.

Der Antriebsstrang 4 ist mit einem Schwungrad 6 - auch Schwungscheibe genannt - ausgerüstet. Diese aus dem Stand der Technik vorbekannte Konstruktion dient insbesondere dazu, im bestimmungsgemäßen Pressfall eine hinreichende Presskraft mittels des Presskolbens erzeugen zu können.

Das Schwungrad 6 ist antriebsseitig die Rutschkupplung 7 vorgeschaltet, die schaltbar ausgebildet ist. Vorzugsweise ist die Rutschkupplung 7 hydraulisch schaltbar.

Dem Schwungrad 6 ist antriebsseitig eine weitere Kupplung 10 nachgeschaltet. Diese ist als Überlastkupplung ausgebildet, beispielsweise in der Ausgestaltung einer Rutschkupplung. Diese weitere Kupplung 10 ist mit einer Breme 11 zu einer Kupplungs-Brems-Kombination 9 kombiniert. Dabei ist die weitere Kupplung 10 hydraulisch schaltbar und die Bremse 11 federbetätigt. Die dem Schwungrad 6 vorgeschaltete Rutschkupplung bildet zusammen mit der dem Schwungrad 6 nachgeschalteten Kupplungs-Brems-Kombination 9 die erfindungsgemäße Kupplungsanordnung 8 aus.

Im dargestellten Ausführungsbeispiel sind noch zwei Getriebe vorgesehen, und zwar ein Getriebe 12, auch Hauptgetriebe genannt, sowie ein Eingangsgetriebe 14. Das Eingangsgetriebe 14 ist im gezeigten Ausführungsbeispiel der Rutschkupplung 7 vorgeschaltet. Alternativ hierzu wäre es auch möglich, das Eingangsgetriebe 14 zwischen Rutschkupplung 7 und Schwungrad 6 anzuordnen.

Das Getriebe 12 ist abtriebsseitig der Kupplungs-Brems-Kombination 9 vorgesehen, wobei es dem Arbeitsaggregat 5 vorgeschaltet ist.

Gemäß einer besonders bevorzugten Ausführungsform der Erfindung bilden das Schwungrad 6, die Kupplungs-Brems-Kombination 9 und das Getriebe 12 eine gemeinsame Baueinheit 13 aus. Alternativ sind nur das Schwungrad 6 und die Kupplungs-Brems-Kombination 9 zu einer gemeinsamen Baueinheit 13 miteinander kombiniert, wie in Fig. 1 dargestellt.

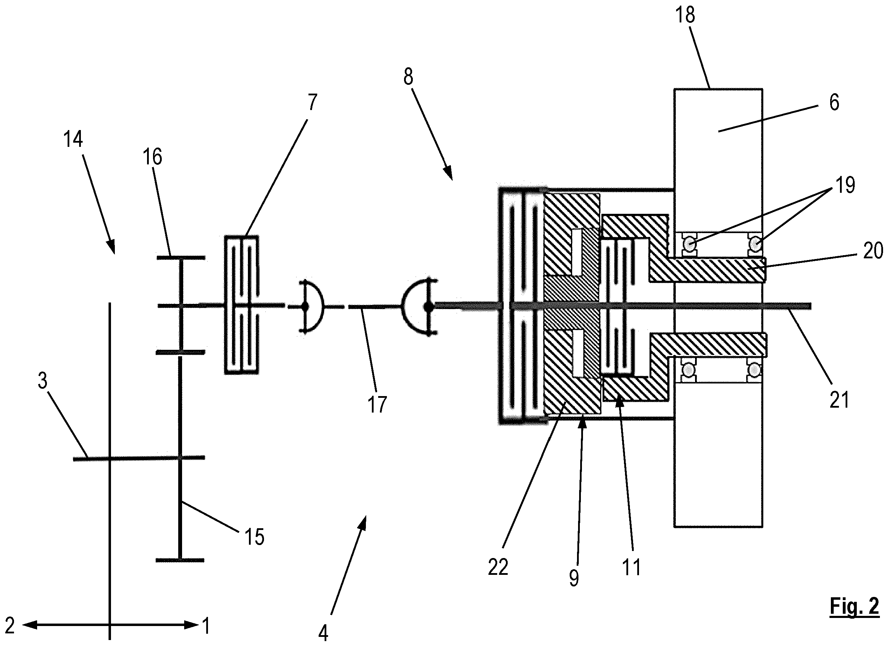

Fig. 2 lässt in einer weiteren schematischen Darstellung die erfindungsgemäße Kupplungsanordnung 8 erkennen.

Wie sich aus dieser Darstellung ergibt, verfügt das der Rutschkupplung 7 vorgeschaltete Eingangsgetriebe 14 über zwei Zahnräder Z₁ 15 und Z₂ 16, wobei eine Übersetzung ins Schnellere stattfindet. Dies ermöglicht in vorteilhafter Weise ein in der Größe kleiner dimensioniertes Schwungrad 6.

Zwischen der Rutschkupplung 7 und dem Schwungrad 6 ist eine Gelenkwelle 17 zwischengeschaltet. Diese dient einem etwaigen Winkelversatz zwischen dem Eingangsgetriebe 14 und dem Antriebseingang des Schwungrads 6.

Zwischen Gelenkwelle 17 und Schwungrad 6 ist ein Topf 18 zwischengeschaltet, der der Kupplungs-Brems-Kombination 9 als Einhausung dient. Es ist so eine besonders kompakte Bauform realisiert.

Die Kupplungs-Brems-Kombination 9 verfügt über die weitere Kupplung 10 und die Bremse 11, die über eine gemeinsame hydraulische Schalteinrichtung 22 miteinander gekoppelt sind. Dabei ist die Bremse 11 von einem Gehäuse 20 eingehaust, das unter Zwischenordnung entsprechender Lager 19 das Schwungrad 6 verdrehbar aufnimmt. Mit der Kupplungs-Brems-Kombination 9 steht eine Abtriebswelle 21 in Wirkverbindung, die im endmontierten Zustand in einer Antriebsverbindung mit dem Getriebe 12 steht.

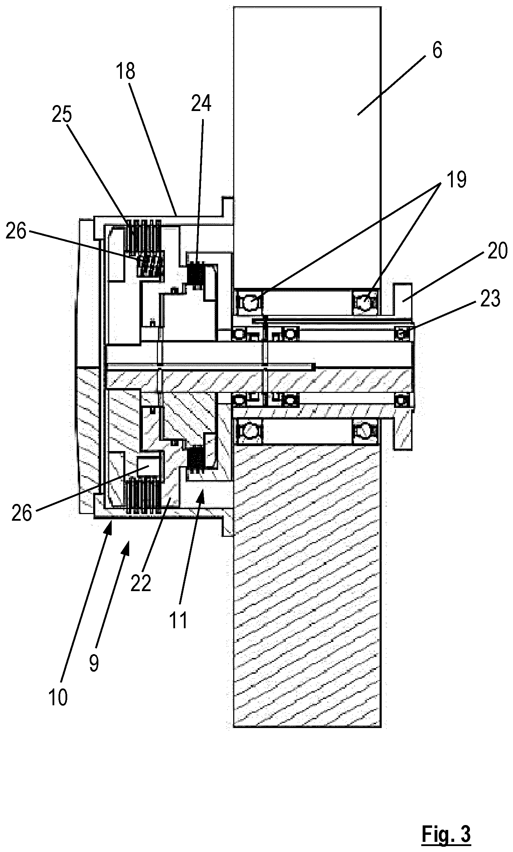

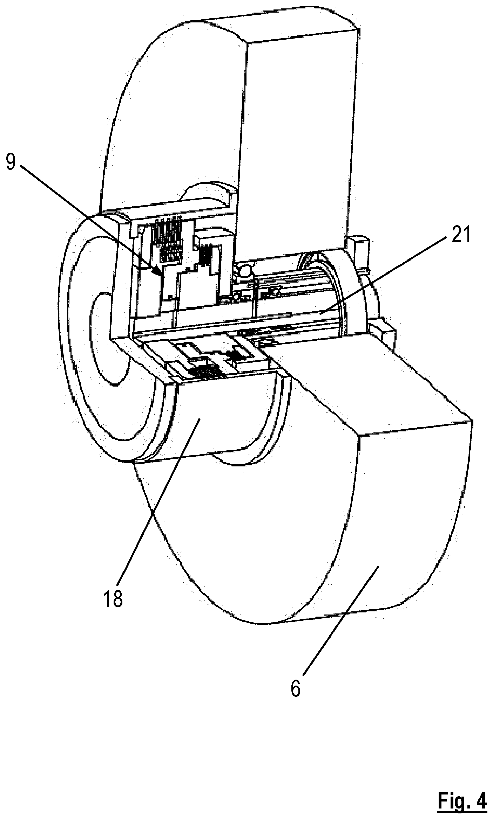

Die weiteren Figuren 3 und 4 lassen den Aufbau der Kupplungs-Brems-Kombination 9 genauer erkennen. Wie sich aus diesen Darstellungen ergibt, sind zur verdrehbaren Lagerung der Abtriebswelle 21 entsprechende Lager 23 vorgesehen, die die Abtriebswelle 21 gegenüber dem Gehäuse 20 abstützen. Dieses Gehäuse 20 trägt in schon vorbeschriebener Weise auch das Schwungrad 6.

Die Kupplung 10 und die Bremse 11 der Kupplungs-Brems-Kombination 9 verfügen über entsprechende Lamellenpakete 24 und 25, und zwar unter Zwischenordnung der hydraulischen Schalteinrichtung 22. Diese steht unter Zwischenordnung entsprechender Federn 26 unter einer Federvorspannung. Im Falle einer hydraulischen Betätigung wird die Schalteinrichtung 22 entgegen der auf sie einwirkenden Federkraft mit Bezug auf die Zeichnungsebene nach Fig. 3 nach links bewegt, infolge dessen die Kupplung 10 schaltet und die Bremse 11 öffnet. Insofern sind die Bremse 11 federbetätigt und die Kupplung 10 hydraulisch betätigt ausgebildet.

Wie sich aus einer Zusammenschau der Figuren 1 bis 4 ergibt, wird im bestimmungsgemäßen Betriebsfall Antriebsleistung von einem Motor des Traktors 2 auf das Arbeitsaggregat 5 der Ballenpresse 1 übertragen, und zwar unter Zwischenschaltung des Antriebsstrangs 4. Dabei erfüllt die schaltbare Rutschkupplung 7 der erfindungsgemäßen Kupplungsanordnung 8 im Wesentlichen drei Aufgaben, und zwar wie folgt:
- Schutz vor Überlast, d.h. Sicherstellung, dass kein unzulässig hohes Drehmoment vom Traktor 2 auf die Ballenpresse 1 übertragen wird.
- Beschleunigung des Schwungrades 6, indem insbesondere ein sanftes Zuschalten der Rutschkupplung 7 bei anstehendem traktorseitigem Drehmoment stattfindet.
- Bei einer Überlastung des Arbeitsaggregats 5 beispielsweise im Störfall wird die traktorseitige Motorleistung selbstständig abgeschaltet, d.h. unterbrochen, ohne dass es hierfür eines manuellen Eingriffes durch einen Verwender bedarf.

Die schaltbare Rutschkupplung 7 ist dem Schwungrad 6 antriebsseitig vorgeschaltet. Die zur erfindungsgemäßen Kupplungsanordnung 8 gehörende Kupplungs-Brems-Kombination 9 ist dem Schwungrad 6 antriebsseitig nachgeschaltet. Dabei hat die Kupplungs-Brems-Kombination 9 im Wesentlichen zwei Aufgaben wie folgt:
- Der Kupplungs-Brems-kombinationsseitige Abtrieb wird vor einer zu hohen kinetischen Energie des Schwungrads 6 geschützt, d.h. im Falle einer Überlast kann die Kupplung 10 der Kupplungs-Brems-Kombination 9 durchrutschen, so dass eine ungewollte Überlastung des Arbeitsaggregats 5 ausgeschlossen ist.
- Im Überlastfall findet nicht nur ein Durchrutschen der Kupplung 10 statt. Die erfindungsgemäß vorgesehene Kupplungs-Brems-Kombination 9 ermöglicht vielmehr ein hydraulisches Öffnen der Kupplung 10, was den Abtrieb lastfrei stellt, und dies bei gleichzeitiger Schließung der Bremse 11, wodurch ein gezieltes Anhalten des Antriebsstrangs 4 bewirkt ist.

Die Kupplungs-Brems-Kombination 9 kann zur Detektion eines Durchrutschens der Kupplung 10 mit entsprechenden Sensoren ausgerüstet sein. Diese stehen in kommunikationstechnischer Verbindung mit einer pressenseitigen Steuerung, so dass ein automatischer Betrieb der Kupplungs-Brems-Kombination 9 ermöglicht ist. Im Falle eines detektierten Durchrutschens der Kupplung 10 kann mithin durch die Ballenpresse 1 gesteuert ein automatisches Öffnen der Kupplung 10 bei einem gleichzeitigen Schließen der Bremse 11 stattfinden.

Mittels der pressenseitigen Steuerung kann ferner ein Schalten der Rutschkupplung 7, d.h. ein Ein- und Ausschalten der Presse 1 stattfinden. Einer zusätzlichen kommunikationstechnischen Verbindung zwischen Presse 1 und Traktor 2 bedarf es mithin nicht. Auch ist ein automatischer Betrieb der Presse 1 ermöglicht, d.h. eine manuelle Bedienung durch einen Verwender ist nicht erforderlich, was insbesondere aus sicherheitstechnischen Gründen von Vorteil ist.

### Bezugszeichen

- 1: Ballenpresse
- 2: Traktor
- 3: Zapfwellenabtrieb
- 4: Antriebsstrang
- 5: Arbeitsaggregat
- 6: Schwungrad
- 7: Rutschkupplung
- 8: Kupplungsanordnung
- 9: Kupplungs-Brems-Kombination
- 10: Kupplung
- 11: Bremse
- 12: Getriebe
- 13: Baueinheit
- 14: Eingangsgetriebe
- 15: Zahnrad Z₁
- 16: Zahnrad Z₂
- 17: Gelenkwelle
- 18: Topf
- 19: Lager
- 20: Gehäuse
- 21: Abtriebswelle
- 22: hydraulische Schalteinrichtung
- 23: Lager
- 24: Lamellenpaket
- 25: Lamellenpaket
- 26: Feder

## Patentansprüche

1. Kupplungsanordnung für einen mit einem Schwungrad ausgerüsteten Antriebsstrang einer Ballenpresse, mit einem Schwungrad (6) und mit einer dem Schwungrad (6) antriebsseitig vorgeschalteten Rutschkupplung (7), wobei die Rutschkupplung (7) schaltbar ausgebildet ist, **dadurch gekennzeichnet, dass** eine weitere Kupplung (10) vorgesehen ist, die dem Schwungrad (6) antriebsseitig nachgeschaltet ist, wobei die weitere Kupplung (10) eine Überlastkupplung ist und mit einer Bremse (11) zu einer Kupplungs-Brems-Kombination (9) kombiniert ist, wobei unter Zwischenschaltung der Kupplungs-Brems-Kombination (9) eine Drehmomentenübertragung vom Schwungrad (6) auf eine Abtriebswelle (21) stattfindet.

2. Kupplungsanordnung nach Anspruch 1, **dadurch gekennzeichnet, dass** die weitere Kupplung (10) eine Rutschkupplung ist.

3. Kupplungsanordnung nach Anspruch 1 oder 2, **dadurch gekennzeichnet, dass** die schaltbare Rutschkupplung (7) und die Kupplungs-Brems-Kombination (9) jeweils hydraulisch schaltbar ausgebildet sind.

4. Kupplungsanordnung nach einem der vorhergehenden Ansprüche, **dadurch gekennzeichnet, dass** der Kupplungs-Brems-Kombination (9) ein Getriebe (12) nachgeschaltet ist.

5. Kupplungsanordnung nach Anspruch 4, **dadurch gekennzeichnet, dass** das Schwungrad (6) und die Kupplungs-Brems-Kombination (9) sowie auch das Getriebe (12) eine gemeinsame Baueinheit (13) bilden.

6. Kupplungsanordnung nach einem der vorhergehenden Ansprüche, **dadurch gekennzeichnet, dass** der schaltbaren Rutschkupplung (7) antriebsseitig ein Eingangsgetriebe (14) vor- oder nachgeschaltet ist.

7. Kupplungsanordnung nach einem der vorhergehenden Ansprüche, **dadurch gekennzeichnet, dass** die Kupplungs-Brems-Kombination (9) dazu eingerichtet ist, ein Drehmoment von 7000 Nm bis 8000 Nm, vorzugsweise von 7500 Nm zu übertragen.

8. Kupplungsanordnung nach einem der vorhergehenden Ansprüche, **dadurch gekennzeichnet, dass** die schaltbare Rutschkupplung dazu eingerichtet ist, bei einer Überlast von 2200 Nm bis 3000 Nm, vorzugsweise von 2600 Nm durchzurutschen.

9. Ballenpresse, insbesondere Quaderballenpresse, mit einem Arbeitsaggregat (5) zur Verarbeitung von Erntegut zu Ballen und einem Antriebsstrang (4) für einen Antrieb des Arbeitsaggregats (5), **dadurch gekennzeichnet, dass** der Antriebsstrang eine Kupplungsanordnung (8) nach einem der vorhergehenden Ansprüche 1 bis 8 aufweist.

10. Ballenpresse nach Anspruch 9, **dadurch gekennzeichnet, dass** das Arbeitsaggregat (5) einen in einer Presskammer translatorisch beweglich gelagerten Presskolben bereitstellt.

## Claims

1. Clutch assembly for a baler drive train equipped with a flywheel, comprising a flywheel (6) and a slip clutch (7) upstream of the flywheel (6) on the drive side, wherein the slip clutch (7) is designed to be switchable, **characterized in that** another clutch (10) is provided downstream of the flywheel (6) on the drive side, wherein said another clutch (10) is an overload clutch and is combined with a brake (11) to form a clutch-brake combination (9), wherein torque is transmitted from the flywheel (6) to an output shaft (21) through the interposition of the clutch-brake combination (9).

2. Clutch assembly according to claim 1, **characterized in that** said another clutch (10) is a slip clutch.

3. Clutch assembly according to claim 1 or 2, **characterized in that** the switchable slip clutch (7) and the clutch-brake combination (9) are each designed to be hydraulically switchable.

4. Clutch assembly according to any one of the preceding claims, **characterized in that** a transmission (12) is connected downstream of the clutch-brake combination (9).

5. Clutch assembly according to claim 4, **characterized in that** the flywheel (6) and the clutch-brake combination (9) as well as the transmission (12) form an integral unit (13).

6. Clutch assembly according to any one of the preceding claims, **characterized in that** an input transmission (14) is connected upstream or downstream of the switchable slip clutch (7).

7. Clutch assembly according to any one of the preceding claims, **characterized in that** the clutch-brake combination (9) is configured to transmit a torque of 7000 Nm to 8000 Nm, preferably 7500 Nm.

8. Clutch assembly according to any one of the preceding claims, **characterized in that** the switchable clutch is configured to slip at an overload of 2200 Nm to 3000 Nm, preferably 2600 Nm.

9. Baler, in particular square baler, comprising a working unit (5) for processing crops into bales, and a drive drain (4) for driving the working unit (5), **characterized in that** the drive train comprises a clutch assembly (8) according to any one of the preceding claims 1 to 8.

10. Baler according to claim 9, **characterized in that** the working unit (5) provides a press plunger translationally mounted in a compression chamber.

## Revendications

1. Ensemble d'embrayage pour une chaîne de transmission de presse à balles équipée d'un volant d'inertie, comprenant un volant d'inertie (6) et un embrayage à glissement (7) en amont du volant d'inertie (6) du côté entraînement, l'embrayage à glissement (7) étant conçu pour être commutable, **caractérisé en ce qu'**un autre embrayage (10) est prévu en aval du volant d'inertie (6) du côté entraînement, ledit autre embrayage (10) étant un embrayage de surcharge et étant associé à un frein (11) pour former une combinaison embrayage-frein (9), un couple étant transmis du volant d'inertie (6) à un arbre de sortie (21) par l'intermédiaire de la combinaison embrayage-frein (9).

2. Ensemble d'embrayage selon la revendication 1, **caractérisé en ce que** ledit autre embrayage (10) est un embrayage à glissement.

3. Ensemble d'embrayage selon la revendication 1 ou 2, **caractérisé en ce que** l'embrayage à glissement commutable (7) et la combinaison embrayage-frein (9) sont chacun conçus pour être commutables hydrauliquement.

4. Ensemble d'embrayage selon l'une quelconque des revendications précédentes, **caractérisé en ce qu'**une boîte de vitesses (12) est disposée en aval de la combinaison embrayage-frein (9).

5. Ensemble d'embrayage selon la revendication 4, **caractérisé en ce que** le volant d'inertie (6) et la combinaison embrayage-frein (9) ainsi que la boîte de vitesses (12) forment une unité structurelle commune (13).

6. Ensemble d'embrayage selon l'une quelconque des revendications précédentes, **caractérisé en ce qu'**une transmission d'entrée (14) est disposée en amont ou en aval de l'embrayage à glissement commutable (7).

7. Ensemble d'embrayage selon l'une quelconque des revendications précédentes, **caractérisé en ce que** la combinaison embrayage-frein (9) est configurée pour transmettre un couple compris entre 7000 Nm et 8000 Nm, de préférence 7500 Nm.

8. Ensemble d'embrayage selon l'une quelconque des revendications précédentes, **caractérisé en ce que** l'embrayage à glissement commutable est configuré pour glisser en cas de surcharge comprise entre 2200 Nm et 3000 Nm, de préférence 2600 Nm.

9. Presse à balles, en particulier presse à balles carrées, comprenant une unité de travail (5) destinée à transformer les récoltes en balles, et une chaîne de transmission (4) destinée à entraîner l'unité de travail (5), **caractérisée en ce que** la chaîne de transmission comprend un ensemble d'embrayage (8) selon l'une quelconque des revendications 1 à 8 précédentes.

10. Presse à balles selon la revendication 9, **caractérisée en ce que** l'unité de travail (5) présente un piston de compression monté de manière à pouvoir se déplacer en translation dans une chambre de compression.
